Europäisches Patentamt

(19) European Patent Office

Office européen des brevets

(11) Numéro de publication: **0 055 645**
**A2**

(12) # DEMANDE DE BREVET EUROPEEN

(21) Numéro de dépôt: **81401935.2**

(22) Date de dépôt: **04.12.81**

(51) Int. Cl.³: **G 11 B 7/08**
**G 11 B 7/12**

(30) Priorité: **29.12.80 FR 8027689**

(43) Date de publication de la demande:
**07.07.82 Bulletin 82/27**

(84) Etats contractants désignés:
**DE GB IT NL**

(71) Demandeur: THOMSON-CSF
173, Boulevard Haussmann
F-75360 Paris Cedex 08(FR)

(72) Inventeur: Volleau, Patrick
THOMSON-CSF SCPI 173, bld Haussmann
F-75360 Paris Cedex 08(FR)

(72) Inventeur: Bricot, Claude
THOMSON-CSF SCPI 173, bld Haussmann
F-75360 Paris Cedex 08(FR)

(72) Inventeur: Chaboche, Michel
THOMSON-CSF SCPI 173, bld Haussmann
F-75360 Paris Cedex 08(FR)

(74) Mandataire: Wang, Pierre et al,
THOMSON-CSF SCPI 173, Bld Haussmann
F-75360 Paris Cedex 08(FR)

(54) Dispositif d'exploration optique d'un support d'information.

(57) L'invention se rapporte à un dispositif d'exploration d'une piste portée par un support enregistrable ou lisible optiquement par un rayonnement focalisé

Elle a pour objet une tête de lecture à masse réduite comprenant un objectif de lecture (2) un moteur électrodynamique et des moyens de guidage de l'objectif (8). Le dispositif est remarquable en ce que l'objectif est placé dans le prolongement de la bobine mobile (3), ce qui permet de diminuer sensiblement la masse de l'aimant.

L'invention s'applique notamment dans le domaine de l'informatique à l'exploration d'informations stockées sur disque support.

FIG. 2

EP 0 055 645 A2

## DISPOSITIF D'EXPLORATION OPTIQUE
### D'UN SUPPORT D'INFORMATION

L'invention se rapporte au domaine du stockage d'informations sur supports lisibles optiquement par un rayonnement concentré, et a plus particulièrement pour objet un dispositif d'exploration d'une piste portée par un support enregistrable ou lisible à l'aide d'un faisceau de rayonnement provenant d'une source de rayonnement. La conjonction des progrès réalisés dans la technique des lasers, des couches minces, ainsi que dans la technique des asservissements a permis de réaliser un support d'information, lisible à l'aide d'un faisceau de rayonnement, sur lequel peuvent être enregistrés $10^{10}$ éléments binaires d'information, ce support ayant la forme d'un disque d'une trentaine de centimètres de diamètre. Un tel support peut être utilisé comme mémoire de signaux vidéo et/ou audio, ou comme mémoire informatique. Dans cette dernière application, il faut pour cela disposer d'un dispositif d'accès rapide à une piste, soit pour inscrire l'information en un point détermné d'une piste lisse inscrite préalablement, soit pour lire l'information inscrite en un point quelconque de la piste. Par sa nature, c'est surtout dans le domaine de l'informatique que l'invention trouve ses principales applications.

En effet, les dispositifs d'exploration antérieurs ont été réalisés de façon à accéder à l'information en quelques secondes et, s'ils sont suffisants pour une information du type signal vidéo, ils ne le sont plus pour une application informatique. Dans les dispositifs d'exploration antérieurement connus, le positionnement radial correct de la tête de lecture optique est assuré par des moyens mécaniques assurant soit le déplacement du disque, soit le déplacement de la tête de lecture. Lorsque la tête de lecture et le disque sont correctement positionnés l'un par rapport à l'autre, le suivi radial de la piste sur laquelle est enregistrée l'information peut se faire à l'aide d'un miroir galvanométrique mobile autour d'un axe parallèle au plan du disque, qui réfléchit le faisceau de rayonnement vers l'objectif de lecture. L'asservissement vertical, tel que le faisceau lumineux de lecture soit correctement focalisé sur le disque, est assuré par un moteur linéaire de type électrodynamique qui déplace l'objectif.

L'invention porte plus spécialement sur l'agencement du moteur par rapport à l'objectif.

L'invention est remarquable dans le sens qu'elle permet une réduction de masse du pot magnétique utilisé pour créer le champ magnétique dans lequel la bobine mobile du moteur est plongée. Cette réduction de masse procure un positionnement plus rapide et plus aisé de la tête de lecture mobile radialement par rapport au disque support. En effet, antérieurement, la masse de la tête de lecture ne peut guère être inférieure à une centaine de grammes. Du fait que cette masse à déplacer est grande, les temps d'accès correspondant sont élevés. Une tête de lecture selon l'invention permet également d'obtenir une forme plus compacte de l'ensemble moteur-objectif avec pour conséquence une moindre sensibilité de l'équipage mobile aux résonances mécaniques indésirables.

L'invention a pour objet un dispositif d'exploration optique d'un support d'information par un rayonnement optique focalisé au moyen d'un objectif dont le déplacement selon son axe optique est assuré par un moteur électrodynamique, ledit moteur comprenant un aimant (4', 5', 6') à entrefer annulaire et une bobine mobile (3) plongeant dans ledit entrefer, caractérisé en ce que ledit objectif est monté dans une nacelle formant un prolongement de ladite bobine ; ladite nacelle contenant un miroir de renvoi dudit rayonnement et pouvant coulisser selon ledit axe optique dans un manchon fixé à la pièce polaire extérieure dudit aimant.

L'invention sera mieux comprise et d'autres caractéristiques apparaîtront à l'aide de la description qui suit en référence aux figures annexées.

La figure 1 représente schématiquement une tête de lecture optique simplifiée telle qu'elle existe dans l'art antérieur ;

la figure 2 représente schématiquement une tête de lecture optique conforme à l'invention ;

la figure 3 représente une vue en coupe partielle d'une réalisation d'une tête de lecture optique conforme à l'invention.

Le dispositif d'exploration est décrit précisément dans le cadre de la lecture optique de supports sur lesquels l'information est enregistrée. Mais, le même dispositif d'exploration est utilisable pour l'enregistrement d'informations sur un support sur lequel une piste lisse a été préalablement enregistrée, l'information étant inscrite sur cette piste.

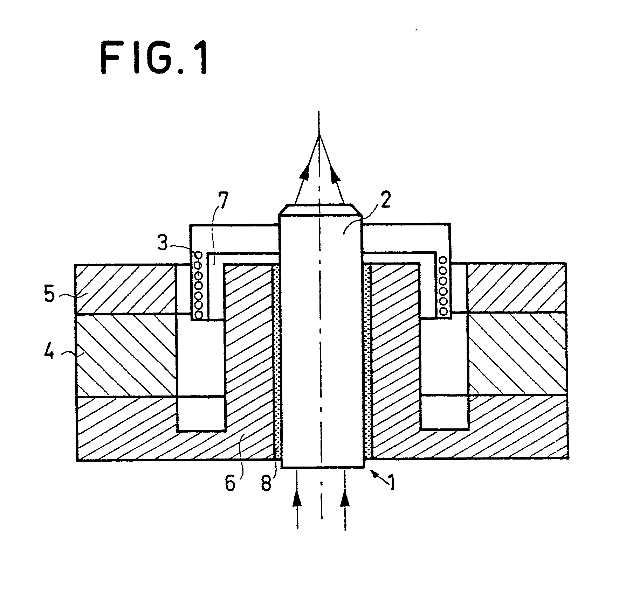

La figure 1 représente schématiquement une tête de lecture optique telle qu'elle existe dans l'art antérieur.

Une telle tête de lecture 1 renferme un moteur électrodynamique comportant un aimant permanent annulaire 4, une pièce polaire externe 5 qui repose sur la face supérieure de l'aimant 4, ainsi qu'une pièce polaire centrale 6, dont une partie recouvre exactement la face inférieure de l'aimant 4, et dont une autre partie forme un noyau de hauteur égale à celle de l'aimant 4. Les pièces polaires 5 et 6 délimitent un entrefer annulaire 7 dans lequel s'établit une configuration radiale de champ magnétique. Le moteur comporte en outre une bobine mobile 3, placée coaxialement autour du noyau de la pièce polaire 6 et solidaire de l'objectif 2. L'ensemble bobine-objectif peut se mouvoir axialement dans l'entrefer annulaire 7. Sous l'influence d'un courant électrique traversant l'enroulement de la bobine mobile, une force électrodynamique est créée dans la direction de l'axe optique de l'objectif 2. Le coulissement de l'objectif 2 est assuré par un manchon 8 qui traverse le noyau de la pièce polaire 6. La résistance de frottement au mouvement de coulissement est rendue aussi faible que possible grâce à un garnissage des surfaces de glissement au moyen d'un matériau constitué de graphite et de plomb. Un faisceau lumineux, issu d'une source de rayonnement lumineux après passage dans des différents systèmes optiques qui ne seront pas décrits plus précisément dans le cadre de l'invention, est reçu par l'objectif 2 qui le focalise de façon à former un spot d'exploration.

Sur la figure 1, les rayons qui émergent de l'objectif 2 convergent en un point où doit se situer la surface d'un support d'information. La partie mobile constituée principalement de l'objectif 2 de la bobine mobile 3, occupe la partie centrale du dispositif d'exploration. De ce fait, les éléments magnétiques 4, 5 et 6 sont situés autour de l'objectif 2, ce qui conduit à des dimensions importantes et à une masse totale non négligeable qu'il faut déplacer pour atteindre des plages distinctes du support d'information. La masse d'un tel système ne peut guère être inférieure à une centaine de grammes pour des performances acceptables de focalisation dans le cadre d'applications informatiques.

La présente invention vise à réduire la masse de l'ensemble en faisant en sorte que la partie centrale de l'ensemble magnétique ne renferme plus l'objectif de lecture. La structure de l'aimant peut donc être plus compacte tout en fournissant une force motrice aussi grande qu'avec la disposition de la figure 1.

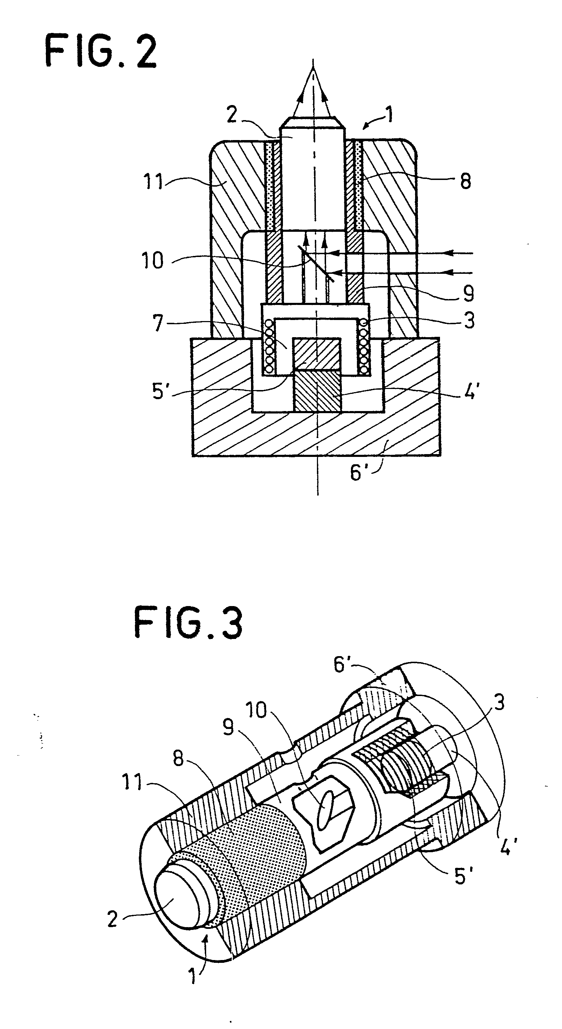

La figure 2 représente schématiquement un dispositif d'exploration conforme à l'invention.

Ce dispositif d'exploration 1 comporte un aimant permanent cylindrique 4', une pièce polaire 5' recouvrant exactement la face supérieure de l'aimant 4', également cylindrique. Sur la face inférieure de l'aimant 4' se trouve une autre pièce polaire 6', formant également une couronne autour de l'aimant 4' et de la pièce 5'. Cette pièce 6' est séparée radialement du noyau 4' et 5' par un entrefer 7. Dans cet entrefer annulaire 7, une bobine mobile 3 peut se mouvoir axialement autour du noyau constitué par les pièces 4' et 5', décrites précédemment. Une nacelle porte objectif 9 est placée dans le prolongement de la bobine mobile 3. Elle comporte une ouverture circulaire dans sa paroi latérale pour livrer passage à un rayonnement lumineux. Cette nacelle peut contenir différents systèmes optiques ou électroniques. Il est représenté, sur la figure à titre d'exemple non limitatif, un miroir de renvoi 10 destiné à dévier d'un angle de 90° le rayonnement lumineux de lecture. Le miroir peut être supporté par le fond de la bobine mobile 3, ou lorsque celle-ci n'a pas de fond, par le pôle central 5'. L'objectif 2 est installé dans la partie supérieure de la nacelle 9 qui peut coulisser suivant la direction de l'axe optique dans un manchon 11 attaché à la pièce polaire externe 6'. La nacelle 9 peut être composée de deux parties, l'une servant d'entretoise entre le fond de la bobine mobile 3 et l'objectif 2, l'autre 8 formant autour de l'objectif une garniture anti-friction. Le manchon 11 peut comporter une fenêtre de passage du rayonnement optique en regard d'une autre fenêtre prévue dans la nacelle 9. La configuration de nacelle 9 adoptée sur la figure 2 assure dans de bonnes conditions l'application de l'effort moteur à l'objectif. Ceci permet de réduire les vibrations mécaniques parasites qui peuvent prendre naissance avec la configuration de la figure 1. Ces vibrations mécaniques sont particulièrement gênantes car elles correspondent à des fréquences naturelles de résonance qui peuvent se situer dans la bande de fonctionnement du dispositif d'exploration.

La figure 3 représente une vue en coupe partielle d'une réalisation d'une tête de lecture optique 1 conforme à l'invention. Les mêmes références que celles de la figure 2 s'appliquent. Il faut remarquer que les parties magnétiques 4', 5' et 6' peuvent occuper la partie centrale du système du fait que l'objectif 2 est dans le prolongement du système de bobine 3.

Le miroir 10 dont il a été question précédemment a pour fonction principale de dévier le rayonnement lumineux de lecture. On peut également le prévoir avec un transducteur électromécanique pour corriger des erreurs de suivi d'une piste par le spot focalisé.

La nacelle 9 joue le rôle de porte objectif, mais elle peut aussi porter l'enroulement de la bobine mobile 3 par sa partie inférieure qui fait alors office de mandrin de bobinage. Un élément élastique léger peut être prévu pour relier la nacelle 9 au manchon 11 pour s'opposer à une rotation de celle-ci pouvant entraîner une erreur d'orientation du miroir 10. Si le miroir est fixé au pôle central 5', l'élément élastique doit maintenir alignées les deux fenêtres de transmission, mais cet alignement n'est pas critique.

6

REVENDICATIONS

1. Dispositif d'exploration optique d'un support d'information par un rayonnement optique focalisé au moyen d'un objectif (2) dont le déplacement selon son axe optique est assuré par un moteur électrodynamique, ledit moteur comprenant un aimant (4', 5', 6) à entrefer annulaire et une bobine mobile (3) plongeant dans ledit entrefer, caractérisé en ce que ledit objectif est monté dans une nacelle (9) formant un prolongement de ladite bobine (3);

ladite nacelle (9) contenant un miroir de renvoi (10) dudit rayonnement et pouvant coulisser selon ledit axe optique dans un manchon (11) fixé à la pièce polaire extérieure (6') dudit aimant.

2. Dispositif selon la revendication 1, caractérisé en ce que ledit miroir (10) est solidaire de la bobine (3).

3. Dispositif selon la revendication 1, caractérisé en ce que ledit miroir (10) est solidaire de la pièce polaire centrale (5').

4. Dispositif selon l'une quelconque des revendications 1 à 3, caractérisé en ce que ledit miroir (10) est associé à un transducteur électromécanique permettant de le faire pivoter autour d'un axe formant un angle avec ledit axe optique.

5. Dispositif selon l'une quelconque des revendications 1 à 4, caractérisé en ce que des moyens sont prévus pour empêcher ladite nacelle (9) de pivoter par rapport audit manchon (11)

FIG.1

# FIG.2

# FIG.3